# EUROPEAN PATENT APPLICATION

(11) **EP 4 549 263 A1**
(43) Date of publication of application: **07.05.2025**
(21) Application number: 23745255.2
(22) Date of filing: 16.06.2023
(51) Int. Cl.: B60T 7/22, B60T 8/17, B60T 8/32, B60W 30/09

(54) **CONTROL DEVICE AND CONTROL METHOD FOR RIDER ASSIST SYSTEM**

(30) Priority: 30.06.2022 JP 2022106125
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/056260
(87) International publication number: WO 2024/003666

(57) **Abstract**

The invention obtains a controller and a control method capable of improving assistance performance for a rider.

In a controller for a rider-assistance system, while the rider operates a drive operation section, an execution section executes first speed control operation to control a speed of a motorcycle (100) on the basis of positional relationship information between the motorcycle (100) and another vehicle (200) that travels in front of the motorcycle (100). In the case where the presence of the necessity to stop the motorcycle (100) or make the motorcycle (100) become a crawl is determined during execution of the first speed control operation, the execution section executes second speed control operation to automatically generate deceleration to the motorcycle (100) and to stop the motorcycle (100) or make the motorcycle (100) become the crawl while the rider operates the drive operation section.

## Description

### Technical Field

The present invention relates to a controller for a rider-assistance system of a motorcycle and a control method for a rider-assistance system of a motorcycle.

### Background Art

In some conventional rider-assistance systems, a controller executes speed control operation of a motorcycle on the basis of positional relationship information between the motorcycle and another vehicle traveling ahead of the motorcycle (for example, see PTL 1).

### Citation List

### Patent Literature

PTL 1: WO2018/197965A1

### Summary of Invention

### Technical Problem

Such a case is assumed that the speed control operation is executed to adjust a positional relationship between the motorcycle and the other vehicle traveling ahead of the motorcycle while a rider operates a drive operation section that is an operation section of a drive system in the motorcycle. Such speed control operation is designed on the assumption of a situation where the rider operates the drive operation section continuously, that is, a situation where the motorcycle travels in a high-speed range. For this reason, in a situation where necessity to stop the motorcycle or make the motorcycle become a crawl is present, the rider has to cancel the operation of the drive operation section, and then the rider himself/herself has to operate a brake operation section as an operation section of a brake system in the motorcycle.

The invention has been made with the above-described problem as the background and therefore obtains a controller capable of improving assistance performance for a rider. The invention also obtains a control method capable of improving the assistance performance for the rider.

### Solution to Problem

A controller according to the invention is a controller for a rider-assistance system of a motorcycle including: a brake system that applies a braking force to a wheel when a rider operates a brake operation section; and a drive system that applies drive power to the wheel when the rider operates a drive operation section, includes: an acquisition section that acquires positional relationship information between the motorcycle and another vehicle that travels in front of the motorcycle during travel of the motorcycle; and an execution section that executes first speed control operation to control a speed of the motorcycle on the basis of the positional relationship information acquired by the acquisition section while the rider operates the drive operation section, and further includes a determination section that determines presence or absence of necessity to stop the motorcycle or make the motorcycle become a crawl during the travel of the motorcycle. In the case where the determination section determines the presence of the necessity during execution of the first speed control operation, the execution section executes second speed control operation to automatically generate deceleration to the motorcycle and to stop the motorcycle or make the motorcycle become the crawl while the rider operates the drive operation section.

A control method according to the invention is a control method for a rider-assistance system of a motorcycle including: a brake system that applies a braking force to a wheel when a rider operates a brake operation section; and a drive system that applies drive power to the wheel when the rider operates a drive operation section, includes: an acquisition step in which an acquisition section of a controller acquires positional relationship information between the motorcycle and another vehicle that travels in front of the motorcycle during travel of the motorcycle; and an execution step in which an execution section of the controller executes first speed control operation to control a speed of the motorcycle on the basis of the positional relationship information acquired in the acquisition step while the rider operates the drive operation section, and further includes a determination step in which a determination section of the controller determines presence or absence of necessity to stop the motorcycle or make the motorcycle become a crawl during the travel of the motorcycle. In the execution step, in the case where the presence of the necessity is determined in the determination step during execution of the first speed control operation, the execution section executes second speed control operation to automatically generate deceleration to the motorcycle and to stop the motorcycle or make the motorcycle become the crawl while the rider operates the drive operation section. Advantageous Effects of Invention

In the controller and the control method according to the invention, while the rider operates the drive operation section, the execution section executes the first speed control operation to control the speed of the motorcycle on the basis of the positional relationship information between the motorcycle and the other vehicle that travels in front of the motorcycle. In the case where the presence of the necessity to stop the motorcycle or make the motorcycle become the crawl is determined during the execution of the first speed control operation, the execution section executes the second speed control operation to automatically generate the deceleration to the motorcycle and to stop the motorcycle or make the motorcycle become the crawl while the rider operates the drive operation section. For this reason, in a situation where the necessity to stop the motorcycle or make the motorcycle become the crawl is present, the rider no longer has to cancel the operation of the drive operation section, and then the rider himself/herself no longer has to operate the brake operation section. Therefore, assistance performance for the rider is improved.

### Brief Description of Drawings

Fig. 1 is a view illustrating a mounted state of a rider-assistance system according to an embodiment of the invention to a motorcycle.
Fig. 2 is a diagram illustrating a system configuration of the rider-assistance system according to the embodiment of the invention.
Fig. 3 is a view for explaining a configuration of the rider-assistance system according to the embodiment of the invention.
Fig. 4 is a chart illustrating an operation flow of a controller for the rider-assistance system according to the embodiment of the invention.

### Description of Embodiments

A description will hereinafter be made on a controller and a control method according to the invention with reference to the drawings.

A configuration, operation, and the like, which will be described below, merely constitute one example, and the controller and the control method according to the invention are not limited to a case with such a configuration, such operation, and the like.

For example, a description will hereinafter be made on a case where the controller and the control method according to the invention are used for a rider-assistance system of a two-wheeled motor vehicle. However, the controller and the control method according to the invention may be used for a rider-assistance system of a motorcycle other than the two-wheeled motor vehicle. The motorcycles include a vehicle having an engine as a power source, a vehicle having an electric motor as the power source, and the like. Examples of the motorcycles are a three-wheeled motor vehicle, a motorbike, a scooter, and an electric scooter.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

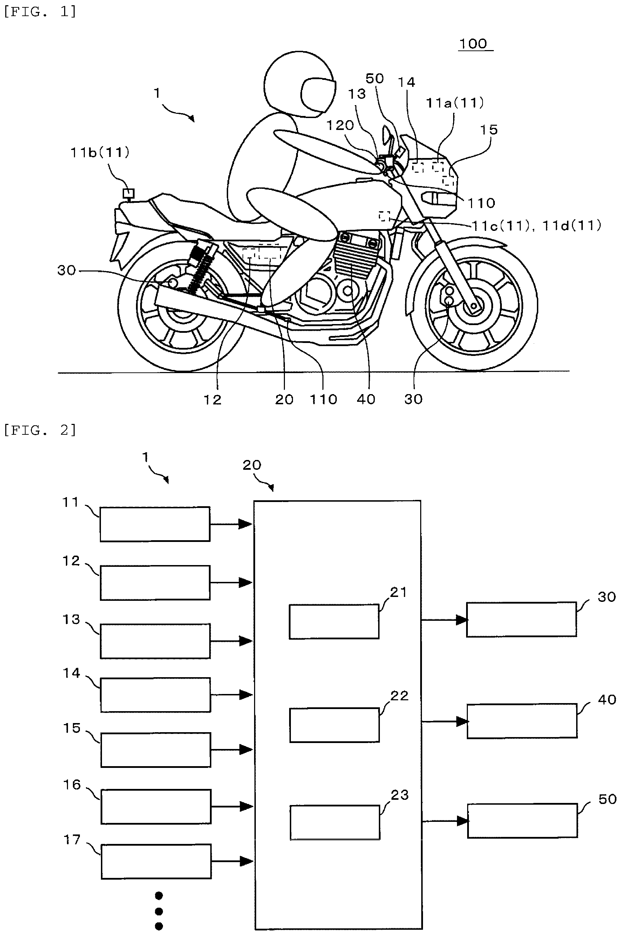

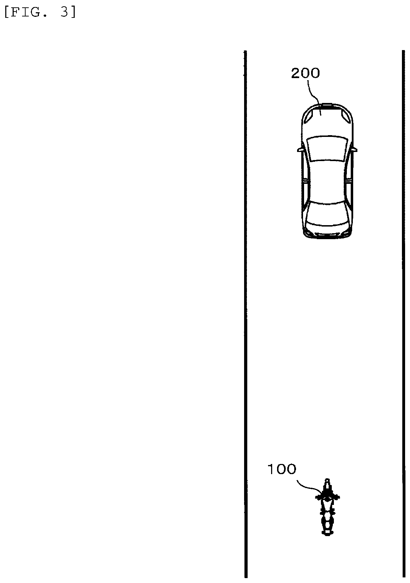

Fig. 1 is a view illustrating a mounted state of the rider-assistance system according to the embodiment of the invention to a motorcycle. Fig. 2 is a diagram illustrating a system configuration of the rider-assistance system according to the embodiment of the invention. Fig. 3 is a view for explaining a configuration of the rider-assistance system according to the embodiment of the invention.

As illustrated in Fig. 1 and Fig. 2, a rider-assistance system 1 is mounted to a motorcycle 100. For example, the rider-assistance system 1 includes a surrounding environment sensor 11, a vehicle behavior sensor 12, a setting input device 13, a communication device 14, a positioning sensor 15, a brake operation sensor 16, a drive operation sensor 17, a controller (ECU) 20, a brake system 30, a drive system 40, and a notification device 50 when necessary.

In the rider-assistance system 1, the controller 20 executes rider-assistance operation to assist a rider of the motorcycle 100 in driving by using output of the surrounding environment sensor 11, the vehicle behavior sensor 12, the setting input device 13, the communication device 14, the positioning sensor 15, the brake operation sensor 16, and/or the drive operation sensor 17. The controller 20 executes the rider-assistance operation by outputting control commands to various devices (for example, the brake system 30, the drive system 40, the notification device 50, and the like). The controller 20 receives output of various sensors (not illustrated) for detecting other types of information when necessary. Each component of the rider-assistance system 1 may exclusively be used for the rider-assistance system 1 or may be shared with another system.

The surrounding environment sensor 11 at least includes a detection section 11a that detects surrounding environment in front of the motorcycle 100. The surrounding environment sensor 11 may include a detection section 11b that detects the surrounding environment behind the motorcycle 100, may include a detection section 11c that detects the surrounding environment to the left of the motorcycle 100, or may include a detection section 11d that detects the surrounding environment to the right of the motorcycle 100. Each of the detection sections 11a, 11b, 11c, 11d is a radar, a Lidar sensor, an ultrasonic sensor, a camera, or the like, for example. At least a part of each of the detection section 11c and the detection section 11d may be substituted by the detection section 11a or the detection section 11b.

Examples of the vehicle behavior sensor 12 are a vehicle speed sensor and an inertial measurement unit (IMU). The vehicle speed sensor detects a speed that is generated to the motorcycle 100. The vehicle speed sensor may detect another physical quantity that can substantially be converted to the speed generated to the motorcycle 100. The IMU detects acceleration in three axes (a front-rear direction, a vehicle width direction, and a vehicle height direction) and angular velocities in three axes (roll, pitch, and yaw) generated to the motorcycle 100. The IMU may detect other physical quantities that can substantially be converted to the three-axis acceleration and the three-axis angular velocities generated to the motorcycle 100. Alternatively, the IMU may partially detect the three-axis acceleration and the three-axis angular velocities.

The setting input device 13 accepts the rider's setting operations of various settings. For example, the rider can switch to enable or disable any of various types of the rider-assistance operation by using the setting input device 13. In addition, for example, the rider can set various modes or various control parameters (for example, allowable values or the like) that are used in the various types of the rider-assistance operation by using the setting input device 13. The setting input device 13 may accept an operation by the rider's body (for example, a hand, a foot, or the like) or may accept voice produced by the rider. In addition, the setting input device 13 may be provided to the motorcycle 100 or may be provided to an accessory (for example, a helmet, a glove, or the like) that is associated with the motorcycle 100.

The communication device 14 communicates wirelessly with another communication device provided to a surrounding vehicle around the motorcycle 100 and/or another communication device provided to a road facility (for example, a traffic light, a traffic sign, a guardrail, a utility pole, or the like). For example, the other communication device provided to the surrounding vehicle transmits, to the communication device 14, travel state information of the surrounding vehicle detected by the surrounding vehicle, surrounding environment information of the surrounding vehicle detected by the surrounding vehicle, or the like. For example, the other communication device provided to the road facility transmits, to the communication device 14, state information of the road facility, surrounding environment information of the road facility detected by the road facility, or the like.

The positioning sensor 15 receives positioning signals that are transmitted from plural communications satellites to identify a position of the motorcycle 100 on a global positioning system. The position of the motorcycle 100 is matched against map information to acquire positional information on a map.

The brake operation sensor 16 detects operation state information of a brake operation section 110 that is an operation section (for example, a brake lever, a brake pedal, or the like) of the brake system 30 operated by the rider. The operation state information is information on a physical quantity (for example, presence or absence of the operation, an operation amount, a gradient of a change in the operation amount, or the like) that is associated with the operation of the brake operation section 110. The brake operation sensor 16 may detect information on another physical quantity that can substantially be converted to the physical quantity associated with the operation of the brake operation section 110.

The drive operation sensor 17 detects operation state information of a drive operation section 120 that is an operation section (for example, a throttle grip or the like) of the drive system 40 operated by the rider. The operation state information is information on a physical quantity (for example, presence or absence of the operation, an operation amount, a gradient of a change in the operation amount, or the like) that is associated with the operation of the drive operation section 120. The drive operation sensor 17 may detect information on another physical quantity that can substantially be converted to the physical quantity associated with the operation of the drive operation section 120.

The controller 20 at least includes an acquisition section 21, an execution section 22, and a determination section 23. The controller 20 as a whole or each of the sections of the controller 20 may collectively be provided in a single casing or may separately be provided in plural casings. In addition, the controller 20 as a whole or each of the sections of the controller 20 may be a microcomputer, a microprocessor unit, or the like, may be one whose firmware or the like can be updated, or may be a program module or the like that is executed by a command from a CPU or the like, for example.

During travel of the motorcycle 100, the acquisition section 21 acquires surrounding environment information of the motorcycle 100 on the basis of the output of the surrounding environment sensor 11. The surrounding environment information includes positional relationship information between the motorcycle 100 and a target (for example, a vehicle, an obstacle, the road facility, a person, an animal, or the like) that is positioned around the motorcycle 100. Examples of the positional relationship information are information on a relative position, a relative distance, a relative speed, relative acceleration, relative jerk, a passing time difference, and a predicted time until a collision. The positional relationship information may be information on another physical quantity that can substantially be converted to one of those. During the travel of the motorcycle 100, the acquisition section 21 may acquire the surrounding environment information of the motorcycle 100 on the basis of the output of the communication device 14.

The execution section 22 executes, as the rider-assistance operation, speed control operation of the motorcycle 100 on the basis of the surrounding environment information (in particular, the positional relationship information) that is acquired by the acquisition section 21. When executing the speed control operation, the execution section 22 outputs the control command to the brake system 30 or the drive system 40. The brake system 30 brakes the motorcycle 100. The drive system 40 as a power source of the motorcycle 100 drives the motorcycle 100. The brake system 30 may be controlled to generate or increase deceleration, or may be controlled to generate or increase the acceleration. The drive system 40 may be controlled to generate or increase the acceleration, or may be controlled to generate or increase the deceleration.

When executing the rider-assistance operation, the execution section 22 outputs the control command to the notification device 50 as necessary. The notification device 50 may warn or notify the rider of the information by display (that is, a sensation through a visual organ as a sensory organ), may warn or notify the rider of the information by sound (that is, a sensation through an auditory organ as the sensory organ), or may warn or notify the rider of the information by vibration (that is, a sensation through a tactile organ as the sensory organ). Examples of the notification device 50 are a display, a lamp, a speaker, and a vibrator. The notification device 50 may be provided to the motorcycle 100 or may be provided to the accessory (for example, the helmet, the glove, or the like) that is associated with the motorcycle 100. In addition, notification operation may warn or notify the rider of the information by generating the instantaneous deceleration or acceleration to the motorcycle 100. That is, the brake system 30 or the drive system 40 may constitute the notification device 50.

The execution section 22 causes the motorcycle 100 to execute first speed control operation. As illustrated in Fig. 3, the first speed control operation is the speed control operation to control the speed of the motorcycle 100 so as to adjust a positional relationship between the motorcycle 100 and a target vehicle, that is, another vehicle 200 traveling in front of the motorcycle 100 on the basis of positional relationship information therebetween. Here, the positional relationship information between the motorcycle 100 and the other vehicle 200 traveling at a position other than the front of the motorcycle 100 may be taken into consideration.

In the first speed control operation, while the rider operates the drive operation section 120, the deceleration or the acceleration is automatically generated to the motorcycle 100, so as to adjust the positional relationship between the motorcycle 100 and the target vehicle, that is, the other vehicle 200 traveling in front of the motorcycle 100. For example, while the rider operates the drive operation section 120, the execution section 22 outputs the control command to the brake system 30 and makes the brake system 30 generate a predetermined amount of a braking force in order to control an inter-vehicular distance or a passing time difference from the target vehicle to a distance or a time difference that corresponds to the operation amount of the drive operation section 120. Alternatively, while the rider operates the drive operation section 120, the execution section 22 outputs the control command to the drive system 40 and reduces drive power by a predetermined amount in order to control the inter-vehicular distance or the passing time difference from the target vehicle to the distance or the time difference that corresponds to the operation amount of the drive operation section 120. Here, when controlling the inter-vehicular distance or the passing time difference from the target vehicle, the execution section 22 may not take the operation amount of the drive operation section 120 by the rider into consideration.

The determination section 23 determines presence or absence of necessity to stop the motorcycle 100 or make the motorcycle 100 become a crawl during the travel of the motorcycle 100. In the case where the determination section 23 determines the presence of the necessity to stop the motorcycle 100 or make the motorcycle 100 become the crawl during execution of the first speed control operation, the execution section 22 executes second speed control operation to automatically generate the deceleration to the motorcycle 100 and stop the motorcycle 100 or make the motorcycle 100 become the crawl while the rider operates the drive operation section 120. In the case where the determination section 23 determines the absence of the necessity to stop the motorcycle 100 or make the motorcycle 100 become the crawl during the execution of the first speed control operation, the execution section 22 continues the first speed control operation.

For example, the determination section 23 determines the presence or the absence of the necessity to stop the motorcycle 100 or make the motorcycle 100 become the crawl on the basis of the output of the vehicle behavior sensor 12 of the motorcycle 100. In the case where the output of the vehicle behavior sensor 12 is information indicating that the speed of the motorcycle 100 falls below a reference speed at the time point or in the future, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the output of the surrounding environment sensor 11. In the case where the output of the surrounding environment sensor 11 is information indicating that the other vehicle 200 is stopped or becomes a crawl in front of the motorcycle 100, the determination section 23 determines the presence of the necessity to stop the motorcycle 100 or make the motorcycle 100 become the crawl. In the case where the output of the surrounding environment sensor 11 is information indicating that the other vehicle 200 traveling in front of the motorcycle 100 is decelerated at high deceleration, the determination section 23 determines the presence of the necessity to stop the motorcycle 100 or make the motorcycle 100 become the crawl. In the case where the output of the surrounding environment sensor 11 is information indicating that a display color of the traffic light ahead the motorcycle 100 is red or yellow, the determination section 23 determines the presence of the necessity to stop the motorcycle 100 or make the motorcycle 100 become the crawl. In the case where the output of the surrounding environment sensor 11 is information indicating that there is a stop line ahead of the motorcycle 100, the determination section 23 determines the presence of the necessity to stop the motorcycle 100 or make the motorcycle 100 become the crawl. In the case where the output of the surrounding environment sensor 11 is information indicating that there is a stop or crawl sign ahead of the motorcycle 100, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the output of the communication device 14. In the case where the output of the communication device 14 is the information indicating that the other vehicle 200 is stopped or becomes the crawl in front of the motorcycle 100, the determination section 23 determines the presence of the necessity to stop the motorcycle 100 or make the motorcycle 100 become the crawl. In the case where the output of the communication device 14 is the information indicating that the other vehicle 200 traveling in front of the motorcycle 100 is decelerated at the high deceleration, the determination section 23 determines the presence of the necessity to stop the motorcycle 100 or make the motorcycle 100 become the crawl. In the case where the output of the communication device 14 is the information indicating that the display color of the traffic light ahead of the motorcycle 100 is red or yellow, the determination section 23 determines the presence of the necessity to stop the motorcycle 100 or make the motorcycle 100 become the crawl. In the case where the output of the communication device 14 is the information indicating that there is the stop line ahead of the motorcycle 100, the determination section 23 determines the presence of the necessity to stop the motorcycle 100 or make the motorcycle 100 become the crawl. In the case where the output of the communication device 14 is the information indicating that there is the stop or crawl sign ahead of the motorcycle 100, the determination section 23 determines the presence of the necessity to stop the motorcycle 100 or make the motorcycle 100 become the crawl. In the case where the output of the communication device 14 is information indicating that a traffic jam or a traffic accident occurs ahead of the motorcycle 100, the determination section 23 determines the presence of the necessity to stop the motorcycle 100 or make the motorcycle 100 become the crawl. In the case where the output of the communication device 14 is information indicating that roadwork is performed ahead of the motorcycle 100, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the map information. In the case where the positional information of the motorcycle 100 on the map, which is acquired on the basis of the output of the positioning sensor 15 and the map information, is the information indicating that there is the stop line ahead of the motorcycle 100, the determination section 23 determines the presence of the necessity to stop the motorcycle 100 or make the motorcycle 100 become the crawl. In the case where the positional information of the motorcycle 100 on the map, which is acquired on the basis of the output of the positioning sensor 15 and the map information, is information indicating that the motorcycle 100 travels in an area where the stop or becoming the crawl is required, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the output of the setting input device 13 that accepts the rider's setting operation. In the case where the output of the setting input device 13 is information indicating that the rider instructs switching from the first speed control operation to the second speed control operation, the determination section 23 determines the presence of the necessity to stop the motorcycle 100 or make the motorcycle 100 become the crawl.

For example, as the second speed control operation, while the rider operates the drive operation section 120, the execution section 22 executes the following operation without using the target vehicle in the first speed control operation as a speed control target. In the operation, the execution section 22 makes the brake system 30 generate or increase the braking force to be applied to a wheel by a predetermined amount, so as to stop the motorcycle 100 or make the motorcycle 100 become the crawl at the deceleration that does not correspond to the operation amount of the drive operation section 120. As the second speed control operation, while the rider operates the drive operation section 120, the execution section 22 may execute the following operation without using the target vehicle in the first speed control operation as the speed control target. In the operation, the execution section 22 makes the brake system 30 generate or increase the braking force to be applied to the wheel by the predetermined amount, so as to stop the motorcycle 100 or make the motorcycle 100 become the crawl at the deceleration that corresponds to the operation amount of the drive operation section 120. Instead of or in addition to making the brake system 30 generate or increase the braking force to be applied to the wheel by the predetermined amount, the execution section 22 may reduce the drive power to be applied to the wheel by the drive system 40 by a predetermined amount.

For example, as the second speed control operation, while the rider operates the drive operation section 120, the execution section 22 executes operation to make the brake system 30 generate or increase the braking force to be applied to the wheel by the predetermined amount, so as to control the inter-vehicular distance or the passing time difference from the target vehicle, that is, the other vehicle 200 traveling in front of the motorcycle 100 to the distance or the time difference that does not correspond to the operation amount of the drive operation section 120. As the second speed control operation, while the rider operates the drive operation section 120, the execution section 22 may execute operation to make the brake system 30 generate or increase the braking force to be applied to the wheel by the predetermined amount, so as to control the inter-vehicular distance or the passing time difference from the target vehicle, that is, the other vehicle 200 traveling in front of the motorcycle 100 to the distance or the time difference that corresponds to the operation amount of the drive operation section 120. Instead of or in addition to making the brake system 30 generate or increase the braking force to be applied to the wheel by the predetermined amount, the execution section 22 may reduce the drive power to be applied to the wheel by the drive system 40 by the predetermined amount.

For example, the execution section 22 changes an allowable value of a speed change state amount, which is generated to the motorcycle 100, between the first speed control operation and the second speed control operation. The first speed control operation is executed in the case where the determination section 23 determines the absence of the necessity to stop the motorcycle 100 or make the motorcycle 100 become the crawl. More specifically, in the second speed control operation, the execution section 22 controls the speed of the motorcycle 100 in a state of increasing or reducing an allowable value of the deceleration and/or an allowable value of a differential value of the deceleration in comparison with that in the first speed control operation, which is executed when the determination section 23 determines the absence of the necessity to stop the motorcycle 100 or make the motorcycle 100 become the crawl.

For example, the execution section 22 makes the notification device 50 execute notification operation to notify the rider of a fact that the first speed control operation is switched or has been switched to the second speed control operation. In addition, for example, in a process of stopping the motorcycle 100 by the second speed control operation, or after stopping or becoming the crawl of the motorcycle 100, the execution section 22 makes the notification device 50 execute notification operation that urges the rider to cancel the operation of the drive operation section 120. In the case where a gear shift operation of the motorcycle 100 is manually performed, for example, in the process of stopping or becoming the crawl of the motorcycle 100 by the second speed control operation, the execution section 22 makes the notification device 50 execute notification operation to urge the rider to operate a clutch. For example, in the process of stopping or becoming the crawl of the motorcycle 100 by the second speed control operation, or after stopping or becoming the crawl of the motorcycle 100, the execution section 22 makes the notification device 50 execute notification operation that urges the rider to operate the brake operation section 110.

In the second speed control operation, when the motorcycle 100 is stopped or becomes the crawl, the execution section 22 maintains the braking force and/or the drive power that is automatically applied by the brake system 30 and/or the drive system 40 at the time point, respectively. Then, the determination section 23 determines presence or absence of the rider's intention to cancel the stop or becoming the crawl of the motorcycle 100. In the case where the determination section 23 determines the presence of the rider's intention to cancel the stop or becoming the crawl of the motorcycle 100, the execution section 22 executes third speed control operation to automatically generate the acceleration to the motorcycle 100 and start or accelerate the motorcycle 100. In the case where the determination section 23 determines the absence of the rider's intention to cancel the stop or becoming the crawl of the motorcycle 100, the execution section 22 continues to maintain the braking force and/or the drive power. In the case where the determination section 23 determines the presence of the rider's intention to cancel the stop or becoming the crawl of the motorcycle 100 in the process of stopping or becoming the crawl of the motorcycle 100 by the second speed control operation, the execution section 22 may execute the third speed control operation to automatically generate the acceleration to the motorcycle 100 and to accelerate the motorcycle 100.

For example, the determination section 23 determines the presence or the absence of the rider's intention to cancel the stop or becoming the crawl of the motorcycle 100 on the basis of the operation state information of the drive operation section 120 by the rider. In addition, instead of or in addition to the operation state information of the drive operation section 120 by the rider, the determination section 23 determines the presence or the absence of the rider's intention to cancel the stop or becoming the crawl of the motorcycle 100 on the basis of the operation state information of the brake operation section 110 by the rider. In the case where the rider does not cancel the operation of the drive operation section 120 in a period from time at which the speed of the motorcycle 100 falls below the reference speed by the second speed control operation or from time at which the motorcycle 100 is stopped or becomes the crawl by the second speed control operation until a lapse of a reference time, the determination section 23 determines the presence of the rider's intention to cancel the stop or becoming the crawl of the motorcycle 100. In the case where the rider does not operate the brake operation section 110 in the period from the time at which the speed of the motorcycle 100 falls below the reference speed by the second speed control operation or from the time at which the motorcycle 100 is stopped or becomes the crawl by the second speed control operation until the lapse of the reference time, the determination section 23 determines the presence of the rider's intention to cancel the stop or becoming the crawl of the motorcycle 100. In the case where the rider increases the operation amount of the drive operation section 120 with a change amount or a change grade that exceeds the reference value in the process of stopping or becoming the crawl of the motorcycle 100 by the second speed control operation or after the motorcycle 100 is stopped or becomes the crawl by the second speed control operation, the determination section 23 determines the presence of the rider's intention to cancel the stop or becoming the crawl of the motorcycle 100. In the case where the rider once cancels the operation of the drive operation section 120 and then operates the drive operation section 120 again in the process of stopping or becoming the crawl the motorcycle 100 by the second speed control operation or in the state where the motorcycle 100 is stopped or becomes the crawl by the second speed control operation, the determination section 23 determines the presence of the rider's intention to cancel the stop or becoming the crawl of the motorcycle 100.

For example, the determination section 23 determines the presence or the absence of the rider's intention to cancel the stop or becoming the crawl of the motorcycle 100 on the basis of the output of the setting input device 13 that accepts the rider's setting operation. In the case where the output of the setting input device 13 is information indicating that the rider instructs switching from the second speed control operation to the third speed control operation, the determination section 23 determines the presence of the rider's intention to cancel the stop or becoming the crawl of the motorcycle 100.

For example, as the third speed control operation, the execution section 22 cancels the braking force that is automatically applied by the brake system 30 in the second speed control operation. In the case where the gear shift operation of the motorcycle 100 is automatically performed, the execution section 22 starts or accelerates the motorcycle 100 by canceling the braking force that is automatically applied by the brake system 30. In the case where the motorcycle 100 is stopped or becomes the crawl on a downhill, the execution section 22 starts or accelerates the motorcycle 100 by canceling the braking force that is automatically applied by the brake system 30. The execution section 22 causes the drive system 40 to generate or increase the drive power to be applied to the wheel when necessary.

For example, the execution section 22 determines whether to execute the third speed control operation on the basis of the surrounding environment information in front of the motorcycle 100. In the case where the surrounding environment information of the front is information indicating that the other vehicle 200 is stopped or becomes the crawl at a position, a distance from which to the motorcycle 100 is shorter than a reference distance, the execution section 22 prohibits the third speed control operation. In the case where the surrounding environment information of the front is still the information on the presence of the necessity to stop the motorcycle 100 or make the motorcycle 100 become the crawl, the execution section 22 prohibits the third speed control operation.

For example, the execution section 22 executes the third speed control operation on the basis of the travel state information, as supplementary information, of the motorcycle 100 or the other vehicle 200 that is positioned in front of the motorcycle 100. Alternatively, for example, the execution section 22 executes the third speed control operation on the basis of the positional relationship information, as the supplementary information, between the motorcycle 100 and the other vehicle 200 that is positioned in front of the motorcycle 100. The execution section 22 preferably changes the behavior of the motorcycle 100 in the third speed control operation between a case where the supplementary information does not satisfy a criterion and a case where the supplementary information satisfies the criterion. In the third speed control operation, the execution section 22 controls the acceleration generated to the motorcycle 100 not on the basis of the positional relationship information between the motorcycle 100 and the other vehicle 200 that is positioned in front of the motorcycle 100 until the speed of the motorcycle 100 reaches the reference speed. Then, after the speed of the motorcycle 100 reaches the reference speed, the execution section 22 controls the acceleration generated to the motorcycle 100 on the basis of the positional relationship information therebetween. In the third speed control operation, after a speed of the other vehicle 200 that is positioned in front of the motorcycle 100 exceeds a reference speed, the execution section 22 automatically generates the acceleration to the motorcycle 100 and starts or accelerates the motorcycle 100. In the third speed control operation, after a relative distance between the motorcycle 100 and the other vehicle 200 that is positioned in front of the motorcycle 100 exceeds a reference distance, the execution section 22 automatically generates the acceleration to the motorcycle 100 and starts or accelerates the motorcycle 100. In the case where the gear shift operation of the motorcycle 100 is automatically performed, in the third speed control operation, the execution section 22 first cancels the braking force that is automatically applied by the brake system 30, and starts the motorcycle 100. Then, after the speed of the other vehicle 200 that is positioned in front of the motorcycle 100 exceeds the reference speed, the execution section 22 increases the drive power that is applied to the wheel by the drive system 40, and accelerates the motorcycle 100. In the case where the gear shift operation of the motorcycle 100 is automatically performed, in the third speed control operation, the execution section 22 first cancels the braking force that is automatically applied by the brake system 30, and starts the motorcycle 100. Then, after the relative distance between the motorcycle 100 and the other vehicle 200 that is positioned in front of the motorcycle 100 exceeds the reference distance, the execution section 22 increases the drive power that is applied to the wheel by the drive system 40, and accelerates the motorcycle 100.

For example, the execution section 22 makes the notification device 50 execute notification operation to notify the rider of a fact that the second speed control operation is switched or has been switched to the third speed control operation. In addition, for example, the execution section 22 makes the notification device 50 execute notification operation to notify the rider of the start or the acceleration at a time point at which the motorcycle 100 is started or starts accelerated by the third speed control operation, or at a time point prior to the time point by a predetermined time. Furthermore, the execution section 22 makes the notification device 50 execute notification operation to notify the rider of whether the acceleration generated to the motorcycle 100 is controlled not on the basis of the positional relationship information between the motorcycle 100 and the other vehicle 200 that is positioned in front of the motorcycle 100 or the acceleration generated to the motorcycle 100 is controlled on the basis of such positional relationship information.

### <Operation of Rider-Assistance System>

A description will be made on operation of the rider-assistance system according to the embodiment.

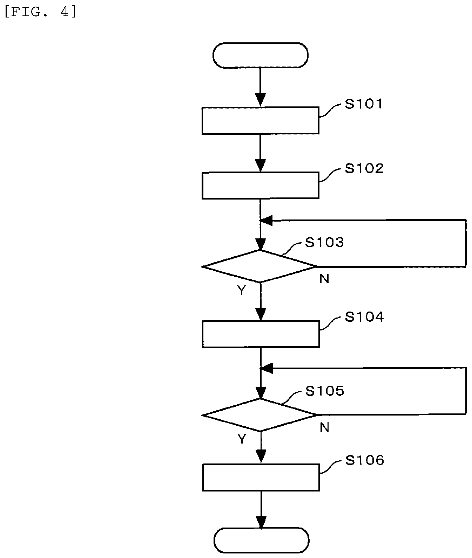

Fig. 4 is a chart illustrating an operation flow of the controller in the rider-assistance system according to the embodiment of the invention.

The controller 20 executes the operation flow illustrated in Fig. 4 during the travel of the motorcycle 100.

### (Acquisition Step)

In step S101, the acquisition section 21 acquires the surrounding environment information of the motorcycle 100 during the travel of the motorcycle 100. The surrounding environment information includes the positional relationship information between the motorcycle 100 and the other vehicle 200 that travels in front of the motorcycle 100. The acquisition section 21 also acquires the various types of the information when necessary.

### (Execution Step)

In step S102, the execution section 22 causes the motorcycle 100 to execute the first speed control operation.

### (Determination Step)

In step S103, the determination section 23 determines the presence or the absence of the necessity to stop the motorcycle 100 or make the motorcycle 100 become the crawl during the travel of the motorcycle 100. If the necessity to stop the motorcycle 100 or make the motorcycle 100 become the crawl is absent, the first speed control operation is continued. If the necessity to stop the motorcycle 100 or make the motorcycle 100 become the crawl is present, the processing proceeds to step S104.

### (Execution Step)

In step S104, the execution section 22 causes the motorcycle 100 to execute the second speed control operation.

### (Determination Step)

In step S105, the determination section 23 determines the presence or the absence of the rider's intention to cancel the stop or becoming the crawl of the motorcycle 100. If the rider's intention to cancel the stop or becoming the crawl of the motorcycle 100 is absent, the second speed control operation is continued. If the rider's intention to cancel the stop or becoming the crawl of the motorcycle 100 is present, the processing proceeds to step S106.

### (Execution Step)

In step S106, the execution section 22 causes the motorcycle 100 to execute the third speed control operation.

### <Effects of Rider-Assistance System>

A description will be made on effects of the rider-assistance system according to the embodiment.

In the rider-assistance system 1, while the rider operates the drive operation section 120, the execution section 22 executes the first speed control operation to control the speed of the motorcycle 100 on the basis of the positional relationship information between the motorcycle 100 and the other vehicle 200 that travels in front of the motorcycle 100. In the case where the presence of the necessity to stop the motorcycle 100 or make the motorcycle 100 become the crawl is determined during the execution of the first speed control operation, the execution section 22 executes the second speed control operation to automatically generate the deceleration to the motorcycle 100 and to stop the motorcycle 100 or make the motorcycle 100 become the crawl while the rider operates the drive operation section 120. For this reason, in a situation where the necessity to stop the motorcycle 100 or make the motorcycle 100 become the crawl is present, the rider no longer has to cancel the operation of the drive operation section 120, and then the rider himself/herself no longer has to operate the brake operation section 110. Therefore, assistance performance for the rider is improved.

In addition, in the rider-assistance system **1,** in the case where the presence of the rider's intention to cancel the stop or becoming the crawl of the motorcycle 100 is determined in the process of stopping or becoming the crawl the motorcycle 100 by the second speed control operation or in the state where the motorcycle 100 is stopped or becomes the crawl by the second speed control operation, the execution section 22 executes the third speed control operation to automatically generate the acceleration to the motorcycle 100 and to start or accelerate the motorcycle 100. Therefore, the start or the acceleration from the second speed control operation is appropriately assisted.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, when the determination section 23 determines the presence of the necessity to stop the motorcycle 100 or make the motorcycle 100 become the crawl, switching from the first speed control operation to the second speed control operation may automatically be suggested, and such suggestion may be confirmed by the rider's setting input of acceptance. In addition, when the determination section 23 determines the presence of the rider's intention to cancel the stop or becoming the crawl of the motorcycle 100, switching from the second speed control operation to the third speed control operation may automatically be suggested, and such suggestion may be confirmed by the rider's setting input of acceptance. Furthermore, the execution section 22 may execute the first speed control operation, the second speed control operation, and/or the third speed control operation on the basis of operation state information of a clutch by the rider. For example, in the case where a clutch disengagement operation by the rider is maintained over a reference time, the execution section 22 cancels the first speed control operation, the second speed control operation, or the third speed control operation executed at the time point. The control parameter of each of the control operation may be settable by the rider.

### Reference Signs List

- 1:: Rider-assistance system
- 11:: Surrounding environment sensor
- 12:: Vehicle behavior sensor
- 13:: Setting input device
- 14:: Communication device
- 15:: Positioning sensor
- 16:: Brake operation sensor
- 17:: Drive operation sensor
- 20:: Controller
- 21:: Acquisition section
- 22:: Execution section
- 23:: Determination section
- 30:: Brake system
- 40:: Drive system
- 50:: Notification device
- 100:: Motorcycle
- 110:: Brake operation section
- 120:: Drive operation section
- 200:: Other vehicle

## Claims

1. A controller (20) for a rider-assistance system (1) of a motorcycle (100) including: a brake system (30) that applies a braking force to a wheel when a rider operates a brake operation section (110); and a drive system (40) that applies drive power to the wheel when the rider operates a drive operation section (120), the controller (20) comprising:
an acquisition section (21) that acquires positional relationship information between the motorcycle (100) and another vehicle (200) that travels in front of the motorcycle (100) during travel of the motorcycle (100); and
an execution section (22) that executes first speed control operation to control a speed of the motorcycle (100) on the basis of the positional relationship information acquired by the acquisition section (21) while the rider operates the drive operation section (120), and further comprising:
a determination section (23) that determines presence or absence of necessity to stop the motorcycle (100) or make the motorcycle (100) become a crawl during the travel of the motorcycle (100), wherein
in the case where the determination section (23) determines the presence of the necessity during execution of the first speed control operation, the execution section (22) executes second speed control operation to automatically generate deceleration to the motorcycle (100) and to stop the motorcycle (100) or make the motorcycle (100) become the crawl while the rider operates the drive operation section (120).

2. The controller (20) according to claim 1, wherein
the execution section (22) changes an allowable value of a speed change state amount, which is generated to the motorcycle (100), between the second speed control operation and the first speed control operation, which is executed when the determination section (23) determines the absence of the necessity.

3. The controller (20) according to claim 1, wherein
the determination section (23) determines the presence or the absence of the necessity on the basis of output of a vehicle behavior sensor (12) that is mounted to the motorcycle (100).

4. The controller (20) according to claim 1, wherein
the determination section (23) determines the presence or the absence of the necessity on the basis of output of a surrounding environment sensor (11) that is mounted to the motorcycle (100).

5. The controller (20) according to claim 1, wherein
the determination section (23) determines the presence or the absence of the necessity on the basis of output of a communication device (14) that communicates with a surrounding vehicle and/or a road facility wirelessly.

6. The controller (20) according to claim 1, wherein
the determination section (23) determines the presence or the absence of the necessity on the basis of map information.

7. The controller (20) according to claim 1, wherein
the determination section (23) determines the presence or the absence of the necessity on the basis of output of a setting input device (13) that accepts the rider's setting operation.

8. The controller (20) according to claim 1, wherein
the determination section (23) determines presence or absence of the rider's intention to cancel a stop or becoming the crawl of the motorcycle (100), and
in the case where the determination section (23) determines the presence of the intention in a process of stopping or becoming the crawl of the motorcycle (100) by the second speed control operation or in a state where the motorcycle (100) is stopped or becomes the crawl by the second speed control operation, the execution section (22) executes third speed control operation to automatically generate acceleration to the motorcycle (100) and to start or accelerate the motorcycle (100).

9. The controller (20) according to claim 8, wherein
the determination section (23) determines the presence or absence of the intention on the basis of operation state information of the drive operation section (120) by the rider.

10. The controller (20) according to claim 8, wherein
the determination section (23) determines the presence or the absence of the intention on the basis of operation state information of the brake operation section (110) by the rider.

11. The controller (20) according to claim 8, wherein
the execution section (22) determines whether to execute the third speed control operation on the basis of surrounding environment information in front of the motorcycle (100).

12. The controller (20) according to claim 8, wherein
the execution section (22) executes the third speed control operation on the basis of travel state information, as supplementary information, of the motorcycle (100) and/or the another vehicle (200) that is positioned in front of the motorcycle (100).

13. The controller (20) according to claim 8, wherein
the execution section (22) executes the third speed control operation on the basis of the positional relationship information, as supplementary information, between the motorcycle (100) and the another vehicle (200) that is positioned in front of the motorcycle (100).

14. The controller (20) according to claim 12 or 13, wherein
the execution section (22) changes behavior of the motorcycle (100) in the third speed control operation between a case where the supplementary information does not satisfy a criterion and a case where the supplementary information satisfies the criterion.

15. A control method for a rider-assistance system (1) of a motorcycle (100) including: a brake system (30) that applies a braking force to a wheel when a rider operates a brake operation section (110); and a drive system (40) that applies drive power to the wheel when the rider operates a drive operation section (120), the control method comprising:
an acquisition step (S101) in which an acquisition section (21) of a controller (20) acquires positional relationship information between the motorcycle (100) and another vehicle (200) that travels in front of the motorcycle (100) during travel of the motorcycle (100); and
an execution step (S102, S104, S106) in which an execution section (22) of the controller (20) executes first speed control operation to control a speed of the motorcycle (100) on the basis of the positional relationship information acquired in the acquisition step (S101) while the rider operates the drive operation section (120), and further comprising:
a determination step (S103) in which a determination section (23) of the controller (20) determines presence or absence of necessity to stop the motorcycle (100) or make the motorcycle (100) become a crawl during the travel of the motorcycle (100), wherein
in the execution step (S102, S104, S106), in the case where the presence of the necessity is determined in the determination step (S103) during execution of the first speed control operation, the execution section (22) executes second speed control operation to automatically generate deceleration to the motorcycle (100) and to stop the motorcycle (100) or make the motorcycle (100) become the crawl while the rider operates the drive operation section (120).
